# EUROPÄISCHE PATENTSCHRIFT

(11) **EP 3 595 827 B1**
(45) Veröffentlichungstag und Bekanntmachung des Hinweises auf die Patenterteilung: **22.10.2025**
(21) Anmeldenummer: 17711162.2
(22) Anmeldetag: 16.03.2017
(51) Int. Cl.: B21D 43/00, B21D 43/02, B21D 43/11, B65G 47/244, B25J 15/00, B21D 43/05, B21D 43/18

(54) **ZENTRIERVORRICHTUNG**
CENTERING DEVICE
DISPOSITIF DE CENTRAGE

(43) Veröffentlichungstag der Anmeldung: 22.01.2020
(73) Patentinhaber: Güdel AG, 4900 Langenthal (CH)
(72) Erfinder: STAUFFER, Adrian, 4900 Langenthal (CH)
(74) Vertreter: Keller Schneider Patent- und Markenanwälte AG
(86) Internationale Anmeldenummer: PCT/EP2017/056272
(87) Internationale Veröffentlichungsnummer: WO 2018/166604

(56) Entgegenhaltungen:
- EP-A1- 1 990 110
- WO-A1-2013/185834
- DE-A1- 10 155 596
- DE-A1- 102008 019 110
- JP-A- 2003 326 327
- US-A1- 2003 118 436

## Beschreibung

### Technisches Gebiet

Die Erfindung betrifft eine Zentriervorrichtung zum Zentrieren von flächigen Werkstücken, insbesondere für in einer Presse zu verarbeitende Platinen aus Blech, umfassend eine Zentrierstation mit mindestens einer ersten und einer zweiten Greifvorrichtung zum Ergreifen des Werkstückes, sowie Fördermittel zum Anfördern von Werkstücken in einer Förderrichtung zur Zentrierstation.

### Stand der Technik

In einer Presse (z. B. einer Mehrstationenpresse oder Presselinie) werden oft vorgestanzte Blechteile, so genannte Platinen, weiter bearbeitet. Bevor die eigentliche Bearbeitung in der Presse erfolgt, müssen die angeförderten Platinen in der Regel abgestapelt bzw. vereinzelt, gewaschen und gegebenenfalls beölt werden. Damit die Platinen in der Presse präzise weiter bearbeitet werden können, müssen sie nach den erwähnten Arbeitsgängen vor dem Einführen in die Presse präzise positioniert und mit einer vorgegebenen Ausrichtung orientiert werden.

Die zu zentrierenden Werkstücke liegen typischerweise als Platinen aus Blech vor. Diese können während des Transportes oder während eines Reinigungsvorganges, insbesondere bei einem unsachgemässen Transport, eine vordefinierte Lage verlieren. Um diese Gefahr zu minimieren, ist es bisher bekannt, die Werkstücke über Roboterarme und Greifer an mehreren Orten gleichzeitig zu ergreifen, anzuheben und zu zentrieren. Solche Vorrichtungen sind jedoch teuer in der Anschaffung und die entsprechenden Verfahren sind sehr aufwändig und teuer zum Umrüsten auf neue Werkstücke.

Weiter sind Verfahren zur Positionierung und Ausrichtung bekannt, bei welchen die Zentrierung mit mechanischen Schiebern und Anschlägen durchgeführt wird. Diese haben allerdings den Nachteil, dass sie bei einem Wechsel des Platinentyps aufwendig umgerüstet werden müssen, indem die Schieber und Anschläge neu positioniert und orientiert werden. Bei der Bearbeitung von unregelmässig geformten oder einer Mehrzahl von kleinen Blechen ist zudem eine grosse Zahl von Schiebern und Anschlägen notwendig, um die korrekte Positionierung sicherzustellen. Weiter haben mechanische Schieber den Nachteil, dass damit während der Zentrierung die Platine verletzt werden kann.

Die JP 2003326327 A (Hitachi Zosen Fukui Corp) offenbart eine Zentriervorrichtung gemäss den Merkmalen des Oberbegriffs des Patentanspruches 1.

Die bekannten Lösungen weisen entweder einen komplexen Aufbau auf oder sind aufwändig zur Umrüstung auf einen neuen Werkstücktyp, d.h. sie sind nicht ohne weiteres für beliebige Werkstücke einsetzbar.

### Darstellung der Erfindung

Aufgabe der Erfindung ist es, eine dem eingangs genannten technischen Gebiet zugehörende Zentriervorrichtung zu schaffen, welche bei kompaktem und einfachem Aufbau universell einsetzbar ist.

Die Lösung der Aufgabe ist durch die Merkmale des Anspruchs 1 definiert. Gemäss der Erfindung sind die erste und die zweite Greifvorrichtung jeweils mit einer ersten respektive einer zweiten Führungseinrichtung horizontal verfahrbar und die erste und die zweite Greifvorrichtung sind um eine Achse frei drehbar.

Damit wird mit einer technisch einfach umzusetzenden Lösung eine besonders einfache Zentriervorrichtung geschaffen. Greifvorrichtungen zum Ergreifen von Werkstücken wie auch Führungseinrichtungen zum Verfahren der Greifvorrichtungen sind dem Fachmann bekannt und sind zudem technisch besonders einfach realisierbar. Weiter können Führungseinrichtungen, insbesondere im Unterschied zu angetriebenen Kugeln eines Kugeltisches respektive einer Kugelplatte, besonders einfach und präzise angesteuert werden.

Dadurch, dass das Werkstück zum Zentrieren durch mindestens zwei frei drehbare Greifvorrichtungen ergriffen wird, wird eine besonders einfache Zentrierung ermöglicht, insbesondere beim Einsatz von genau zwei, um eine Achse frei drehbare Greifvorrichtungen kann das Zentrieren über eine besonders einfache Steuerung erreicht werden. Für die Zentrierung eines Werkstücks wird letzteres durch vorzugsweise mindestens zwei Greifvorrichtungen ergriffen. Nach dem Ergreifen des Werkstückes durch die Greifvorrichtung werden die Führungseinrichtungen betätigt, um das Werkstück zu zentrieren. Da die Greifvorrichtung nun drehbar gelagert ist, können durch die beiden Führungseinrichtungen erzeugte Rotationen des Werkstückes in einfacher Weise aufgenommen werden. Durch die freie Drehbarkeit der Greifvorrichtungen ist bei der Zentrierung somit lediglich zu gewährleisten, dass die Abstände der Greifvorrichtungen untereinander konstant bleiben, während die bei der Zentrierung anfallenden Rotationen durch die frei drehbaren Greifvorrichtungen aufgenommen werden können.

Vorzugsweise ist die Greifvorrichtung um eine vertikale Achse frei drehbar, vorzugsweise ausschliesslich frei drehbar, an der ersten Führungseinrichtung gelagert. Es ist aber prinzipiell auch denkbar, dass die Greifvorrichtung zusätzlich aktiv rotiert werden kann und so aktiv die Zentrierung unterstützen kann, das heisst, die Greifvorrichtung kann derart ausgebildet sein, dass sowohl eine aktive Rotation als auch die freie Drehbarkeit erreicht werden kann. Sofern die Greifvorrichtungen schwenkbar sind, kann die Drehachse auch nicht vertikal ausgerichtet sein.

Mit der Zentriervorrichtung können Werkstücke um einen Winkel von mehr als 90° rotiert werden, so dass diese in einem besonders breiten Feld einsetzbar ist. Es ist zudem denkbar, die Greifvorrichtungen derart zu führen, dass diese einander zum Beispiel in der Förderrichtung übergreifen können, womit Rotationen um einen Winkel von mehr als 180° auch möglich wären.

Unter dem Begriff "Zentrierung" wird nachfolgend eine Änderung der Position und/oder der Ausrichtung des Werkstückes in der Ebene verstanden. Typischerweise erfolgt die Zentrierung über eine Translation, eine Rotation oder beides. Vorzugsweise wird im Rahmen der Zentrierung das Werkstück durch eine überlagerte Translation/Rotation von einer IST-Position in eine SOLL-Position überführt. Typischerweise ist die IST-Position diejenige Ausrichtung des Werkstückes, in welcher das Werkstück zur Zentrierstation gefördert wird und die SOLL-Position ist diejenige Ausrichtung des Werkstückes, in welcher das Werkstück die Zentrierstation verlassen soll,

In einem Verfahren zum Zentrieren eines flächigen Werkstückes, mit einer Zentriervorrichtung gemäss Anspruch 1, insbesondere zum Zentrieren einer in einer Presse zu verarbeitende Platine aus Blech, werden folgende Schritte durchgeführt:
a) Bestimmen einer aktuellen Position und einer Orientierung des auf dem Fördermittel angeförterten Werkstückes mittels einer Erfassungseinrichtung;
b) Fördern des Werkstückes zu einer Zentrierstation;
c) Ergreifen des Werkstückes mit einer ersten und einer zweiten, um eine Achse frei drehbaren Greifvorrichtung.
d) Ausrichten des Werkstückes aufgrund der aktuellen Position und einer Soll-Position durch die erste respektive die zweite Führungseinrichtung.

Durch diese Verfahrensschritte wird ein besonders einfach durchzuführendes Verfahren zum Zentrieren eines Werkstücks geschaffen. Durch die Bestimmung der Position des Werkstückes vor dem Erreichen der Zentrierstation kann letztere besonders kompakt und einfach aufgebaut sein. Insbesondere können die Zentrierstation und die Erfassungseinrichtung damit unabhängig voneinander ausgebildet und zum Beispiel gewartet, aufgerüstet oder repariert werden, womit der Betrieb und Unterhalt der Zentriervorrichtung vereinfacht werden kann.

Vorzugsweise umfassen die Fördermittel mindestens ein Förderband. Damit können die Werkstücke schnell und präzise transportiert werden. Ein Förderband kann zum Beispiel als Magnetband ausgebildet sein, womit ein Werkstück während des Transportes fixiert werden kann. Statt Magnetbänder können auch andere dem Fachmann bekannte Förderbänder wie zum Beispiel Vakuumbänder vorgesehen sein. Die Fixierung des Werkstücks auf dem Förderband kann auch bei geeigneter Wahl der Förderbandoberfläche über die Reibung zwischen dem Werkstück und dem Förderband erreicht werden.

In Varianten können auch andere Fördermittel vorgesehen sein, zum Beispiel Förderplatten, Tragrollen, Kugelplatte etc.

In einer besonders bevorzugten Ausführungsform ist die Zentriervorrichtung derart ausgebildet, dass das Werkstück durch die Greifvorrichtungen und die Führungseinrichtungen während des Zentriervorgangs auf einer Auflagefläche aufliegt. Damit können insbesondere grosse oder verformbare Werkstücke, zum Beispiel grosse Bleche, schonend ausgerichtet werden. Dazu muss das Werkstück nicht zwingend auf dem Förderband aufliegen. In einer bevorzugten Ausführungsform liegt das Werkstück während des Zentrierens auf einer zur Auflagefläche des Förderbandes unterschiedlichen Auflagefläche auf (siehe unten). Alternativ kann das Werkstück zur Zentrierung auch ganz oder teilweise vom Förderband abgehoben respektive angehoben werden.

Bevorzugt umfasst das Förderband mehrere parallele und zueinander beabstandete Förderbandstreifen, wobei in einem Zwischenraum zwischen zwei Förderbandstreifen eine Hubeinheit mit einer Werkstückauflagefläche angeordnet ist, wobei ein Werkstück bei angehobener Werkstückauflagefläche ausschliesslich auf der Werkstückauflagefläche aufliegt. Damit kann ein auf dem Förderband angefördertes Werkstück in einfacher Weise angehoben werden. Das Anheben des Werkstückes ist insbesondere zur Zentrierung des Werkstückes von Vorteil, wenn eine Zentrierung auf dem Förderband selbst nicht geeignet ist. Dies ist typischerweise dann der Fall, wenn das Förderband derart ausgebildet ist, dass sich eine Ausrichtung des Werkstückes während des Transportes nicht ändert. Es wird typischerweise angestrebt, dass sich die Ausrichtung des Werkstückes während des Transportes nicht ändert, insbesondere soll die Ausrichtung des Werkstückes nach der Zentrierung sich zum Beispiel während des Weitertransportes nicht ändern. Die Hubeinheit ist vorzugsweise pneumatisch betrieben, d.h. sie umfasst Pneumatikzylinder, mit welchen die Werkstückauflagefläche direkt oder indirekt angehoben und abgesenkt werden kann. Statt der Pneumatikzylinder kann die Hubeinheit auch andere Antriebe umfassen, zum Beispiel kann ein Spindelantrieb, Hydraulikzylinder oder dergleichen vorgesehen sein.

In Varianten kann auf die Hubeinheit zwischen den Förderbandstreifen auch verzichtet werden. In diesem Fall kann das Werkstück zur Zentrierung auf den Fördermitteln aufliegen oder durch eine Greifeinrichtung von oben ergriffen, angehoben und zentriert werden.

Vorzugsweise wird im Betrieb zum Ergreifen eines Werkstückes gleichzeitig die Greifvorrichtung abgesenkt (siehe unten) und mittels der Hubeinheit das Werkstück vom Förderband abgehoben.

In Varianten kann auch zuerst die Greifvorrichtung nach unten gefahren werden, um das Werkstück zu fixieren, worauf die Hubeinheit zusammen mit dem Werkstück und der Greifvorrichtung nach oben fährt. Die Greifvorrichtung kann in diesem Fall aktiv oder passiv mit der Hubeinheit zusammen nach oben gefahren werden.

Vorzugsweise weist die Werkstückauflagefläche einen Reibungskoeffizienten auf, welcher geringerer ist als ein Reibungskoeffizient einer Werkstückauflagefläche der Förderbandstreifen. Damit wird erreicht, dass bei angehobener Werkstückauflagefläche das nun auf der Werkstückauflagefläche aufliegende Werkstück entgegen eines geringeren Reibwiederstands bewegt, insbesondere zentriert werden kann. Damit kann das Werkstück effizient, mit grösseren Beschleunigungen und geringerer Gefahr der Beschädigungen präzise und effizient zentriert werden.

In Varianten kann auf die unterschiedlichen Reibungskoeffizienten auch verzichtet werden.

Bevorzugt umfasst die Oberfläche der Hubeinheit eine Kugelplatte, welche derart angeordnet ist, dass bei angehobener Hubeinheit ein Werkstück auf Kugeln der Kugelplatte aufliegt. Dazu sind die Kugeln der Kugelplatte frei drehbar gelagert, so dass das Werkstück entgegen eines möglichst geringen Wiederstands durch die Greifvorrichtung bewegt, insbesondere zentriert werden kann.

In Varianten können auch andere Mittel bereitgestellt werden, welche einen Widerstand bei der Zentrierung zwischen Auflagefläche und Werkstück reduzieren können. Statt einer Kugelplatte kann zum Beispiel auch ein Luftkissen oder ähnliches vorgesehen sein.

Vorzugsweise umfasst die Zentrierstation weiter eine dritte und eine vierte Greifvorrichtung, wobei die dritte und die vierte Greifvorrichtung jeweils mittels einer dritten respektive vierten Führungseinrichtung horizontal verfahrbar sind. Insbesondere bei grossflächigen Werkstücken ist es von besonderem Vorteil, wenn mehr als zwei Greifvorrichtungen zur Verfügung stehen. Damit kann die Belastung einzelner Greifvorrichtungen verringert werden, womit ein effizientes Verfahren zum Zentrieren von grösseren Werkstücken erreicht werden kann. Je nach Anordnung der Greifvorrichtungen können damit aber auch mehrere nebeneinander oder hintereinander liegende einzelne Werkstücke simultan zentriert werden, womit wiederum die Effizienz im Verfahren zum Zentrieren der Werkstücke vergrössert werden kann.

In Varianten kann auf die dritte und die vierte Greifvorrichtung auch verzichtet werden. Es ist aber auch denkbar drei oder mehr als vier Greifvorrichtungen vorzusehen, insbesondere zum Beispiel fünf, sechs, sieben, acht oder mehr Führungseinrichtungen. Die bevorzugte Anzahl an Führungseinrichtungen hängt letztlich von der Art der Verwendung, insbesondere von der Grösse, der Stabilität, dem Gewicht, der maximalen Tragkraft der Greifvorrichtung, der Anzahl parallel zu bearbeitenden Werkstücken und weiteren Faktoren ab.

Besonders bevorzugt werden im Verfahren genau zwei Greifvorrichtungen zur Zentrierung eines Werkstückes eingesetzt.

Bevorzugt umfasst eine der Führungseinrichtungen eine erste Linearführung zum Verfahren der Greifvorrichtung in der Förderrichtung und eine zweite Linearführung zum Verfahren der ersten Linearführung rechtwinklig zur Förderrichtung. Damit wird eine besonders einfach aufgebaute und damit kostengünstige kartesische Führung geschaffen. Kartesische Führungseinrichtungen haben den Vorteil, dass sie kostengünstig aufgebaut und einfach in der Ansteuerung und zudem wartungsarm sind. Die Ausrichtung der ersten Linearführung rechtwinklig zur Förderrichtung hat dabei den Vorteil, dass die Zentriervorrichtung als Ganze kompakt aufgebaut werden kann. Insbesondere kann damit bei der Zentrierstation im Wesentlichen auf einen grossen Überhang der Zentrierstation über die Förderbandbreite verzichtet werden. Insbesondere die zweite Linearführung kann derart beschaffen sein, dass zwei oder mehr zweite Linearführungen an dieser ersten Linearführung geführt sind.

In Varianten können die Führungseinrichtungen eine erste Linearführung zum Verfahren der Greifvorrichtung rechtwinklig zur Förderrichtung und eine zweite Linearführung zum Verfahren der ersten Linearführung in der Förderrichtung umfassen. Es ist auch denkbar, dass die ersten respektive die zweiten Linearführungen zueinander nicht parallel verlaufen. Zum Beispiel können die Schienen für die ersten Linearführungen der ersten und der zweiten Führungseinrichtungen zueinander rechtwinklig stehen. Schliesslich können eine oder mehrere der Führungseinrichtungen auch als Roboter ausgebildet sein, welche insbesondere vier, fünf, sechs oder mehr Achsen aufweisen können.

Vorzugsweise sind die ersten Linearführungen der ersten und der zweiten Führung zueinander parallel und die zweiten Linearführungen der ersten und der zweiten Führung zueinander fluchtend angeordnet. Besonders bevorzugt umfassen die ersten Linearführungen der ersten und der zweiten Führung eine, vorzugsweise eine einzige Schienenführung quer zur Förderrichtung, an welcher die ersten Linearführungen quer zur Förderrichtung verfahrbar sind. Durch die fluchtend angeordneten Schienenführungen respektive durch die gemeinsame Schienenführung der ersten Linearführungen zweier Führungseinrichtungen kann wiederum ein kompakter respektive kostengünstiger Aufbau der Zentriervorrichtung erreicht werden. Die beiden ersten Linearführungen sind dabei über eigene Antriebe verfahrbar, so dass sie unabhängig voneinander angesteuert werden können. Dabei kann jedoch in Kauf genommen werden, dass sich die beiden ersten Linearführungen nicht kreuzen können.

In Varianten können die ersten Linearführungen auch an separaten Schienenführungen geführt sein und insbesondere zueinander parallel versetzt angeordnet sein.

Vorzugsweise umfasst die erste Linearführung einen Riemenantrieb zum Verfahren der Greifvorrichtung und/oder die zweite Linearführung einen Riemenantrieb zum Verfahren der ersten Linearführung. Besonders bevorzugt umfassen jeweils die ersten und die zweiten Linearführungen einen Riemenantrieb. Der Einsatz von Riemenantrieben hat den Vorteil, dass grosse Beschleunigungen und schnelle Bewegungen mit grosser Präzision durchgeführt werden können. Riemenantriebe sind zudem kostengünstig in der Anschaffung und im Unterhalt. Es ist aber auch denkbar, dass nur die ersten oder nur die zweiten Linearführungen einen Riemenantrieb umfassen, während die anderen Linearführungen einen weiteren Antrieb, zum Beispiel einen Spindelantrieb, einen pneumatischen oder hydraulischen Antrieb, Zahnstangenantrieb, Linearmotor etc. umfassen.

In Varianten können auch für die ersten und die zweiten Linearführungen andere Antriebe als ein Riemenantrieb vorgesehen sein. Die Antriebe müssen auch in diesem Fall bei den ersten und den zweiten Linearführungen nicht identisch ausgebildet sein. So könnte eine erste Linearführung eine Spindel umfassen, während die zweite Linearführung durch einen Linearmotor betrieben ist.

Vorzugsweise ist die Greifvorrichtung, insbesondere relativ zur ersten Linearführung, absenkbar und anhebbar, vorzugsweise pneumatisch anhebbar und/oder absenkbar. Damit kann in einfacher Weise die Greifvorrichtung zum Werkstück geführt werden, so dass das Werkstück ergriffen werden kann. Dazu umfasst die Greifvorrichtung eine Hebevorrichtung, wobei eine Heberichtung bevorzugt vertikal, vorzugsweise rechtwinklig zu einer Auflagefläche des Förderbands orientiert ist. Die Hebevorrichtung kann derart ausgebildet sein, dass das Werkstück bezüglich einer Heberichtung kraftlos gehalten werden kann. In diesem Fall würde das Werkstück zur Zentrierung über die Auflagefläche des Förderbands respektive der Kugelplatte gezogen. Diese Ausführung ist insbesondere bei grossen und/oder biegbaren, insbesondere unter Eigenlast deformierbaren Werkstücken von Vorteil, da damit eine Deformation des Werkstücks und damit eine Verfälschung der Ausrichtung nach dem Absetzen vermieden werden kann. Anderseits kann die Hebevorrichtung auch derart ausgebildet sein, dass mittels der Hebevorrichtung das Werkstück aktiv angehoben und abgesenkt werden kann. Damit können insbesondere kleinere oder formstabile Werkstücke reibungsfrei zentriert werden. Die Hebevorrichtung kann auch derart ausgebildet sein, dass sowohl ein in vertikaler Richtung kraftloses Halten als auch ein aktives Anheben der Werkstücke möglich ist.

In Varianten kann auf die Absenk- und Anhebbarkeit der Greifvorrichtung relativ zur ersten Linearführung auch verzichtet werden. Weiter kann statt der Greifvorrichtung relativ zur ersten Linearführung auch die erste Linearführung zusammen mit der Greifvorrichtung relativ zur zweiten Linearführung anheb- und absenkbar ausgebildet sein. Schliesslich kann auch die Führung als Ganzes anheb- und absenkbar ausgebildet sein.

Bevorzugt ist die Greifvorrichtung pneumatisch, insbesondere entgegen einer Rückstellkraft, vorzugsweise entgegen einer Federkraft anhebbar. Damit ist die Greifvorrichtung im energielosen Zustand abgesenkt. Diese Anordnung ist von Vorteil, da damit die Greifvorrichtung mit konstanter Kraft, unter Entspannung der Feder, nach unten gefahren werden kann. Die Kraft kann in einfacher Weise über die Wahl der Feder mit gewünschter Federkonstante voreingestellt werden. Besonders bevorzugt erfolgt das Absenken der Greifvorrichtung ausschliesslich über die Federkraft. Damit wird eine Druckausübung auf das Werkstück in einfacher Weise kontrollierbar. Das Anheben der Greifvorrichtung erfolgt vorzugsweise pneumatisch. Damit können besonders schnelle Bewegungen ausgeführt werden, das heisst, die Greifvorrichtung kann nach der Zentrierung schnell angehoben werden. Damit werden kürzere Zyklen bei der Zentrierung erreicht, womit ein besonders effizientes Verfahren geschaffen wird.

In Varianten kann die Greifvorrichtung auch anderweitig anheb- und absenkbar ausgebildet sein. Die Absenkung kann auch durch die Schwerkraft erfolgen. Weiter kann prinzipiell auch das Anheben statt das Absenken gegen eine Federkraft erfolgen. So können beim Betrieb der Führungseinrichtungen Beschädigungen der Zentriervorrichtung bei Fehlfunktionen der Hebevorrichtung, zum Beispiel im Falle eines Lecks in der Pneumatik, vermieden werden. Weiter können sowohl das Anheben als auch das Absenken pneumatisch, mit einer sogenannten pneumatischen Feder, erfolgen. Weiter können statt der Pneumatik auch Zahnstangenantriebe, Hydraulikantriebe, insbesondere bei kurzen Hüben auch magnetische Antriebe etc. vorgesehen sein.

Vorzugsweise umfasst die Greifvorrichtung einen Sauger zum Ergreifen des Werkstücks. Insbesondere bei einer bereits pneumatisch betätigten Hebevorrichtung kann die bestehende Infrastruktur besser ausgenutzt werden. So könnte zum Beispiel auch das Förderband als Vakuumbänder ausgebildet sein. Mit Sauger können zudem Werkstücke besonders schonend ergriffen werden. Weiter gestaltet sich das Ergreifen der Werkstücke mit Saugern besonders einfach, da im Wesentlichen lediglich eine Fläche des Werkstücks vorliegen muss, welche dem Saugerdurchmesser entspricht.

In Varianten kann die Greifvorrichtung auch anderweitig ausgebildet sein. So kann die Greifvorrichtung zum Beispiel einen Elektromagneten umfassen. Weiter kann die Greifvorrichtung auch aktiv betätigbare Klammern umfassen. Auch Haken können vorgesehen sein, welche zum Beispiel einen Randbereich des Werkstückes hintergreifen können. Dem Fachmann sind auch weitere mögliche Ausbildungen eines Greifers bekannt.

Vorzugsweise umfasst die Zentriervorrichtung eine Erfassungseinrichtung zum Erfassen einer Position und einer Orientierung eines angeförderten Werkstücks. Basierend auf diesen erfassten Informationen kann dann die Korrektur der Position und der Orientierung des Werkstücks durch die Zentriervorrichtung erfolgen. Die Erfassungseinrichtung ist damit vor der Zentrierstation angeordnet, so dass die IST-Position vor der Zentrierung ermittelbar ist.

In Varianten kann die Erfassungseinrichtung auch durch die Zentrierstation umfasst sein. In diesem Fall kann mittels der Zentrierstation selbst die IST-Position erkannt werden, zum Beispiel indem die Greifer am Werkstück vordefinierte Punkte ergreifen.

Vorzugsweise umfasst die Erfassungseinrichtung eine Zeilenkamera, welcher bezüglich einer Förderrichtung vor der Zentrierstation angeordnet ist. Die Zeilenkamera ist damit im Zuführweg der Werkstücke angeordnet und erstreckt sich vorzugsweise in Querrichtung über eine Zuführbahn für die Werkstücke. Die Position und Orientierung der Werkstücke wird somit während derer Zuführung durch die Zeilenkamera erfasst. Die Zeilenkamera kann einfach ausgebildet werden, ermöglicht eine präzise Erfassung von Position und Orientierung und erfordert im Gegensatz zu anderen Erfassungseinrichtungen, wie z. B. Kameras, keine aufwendige Bildverarbeitung.

In Varianten kann aber auch eine andere Erfassungseinrichtung vorgesehen sein, zum Beispiel eine Kamera, ein Sensorgitter oder dergleichen.

In einer bevorzugten Ausführungsform ist die Zeilenkamera im Übergang, insbesondere in einer Lücke zwischen zwei Förderbändern angeordnet und umfasst einen Scanner, welcher vorzugsweise vertikal unterhalb der Auflagefläche der Werkstücke liegt, und einen Reflektor, welcher vertikal über dem Raum liegt, durch welchem die Werkstücke hindurch gefördert werden. Das Werkstück wird damit von der Unterseite gescannt.

In Varianten kann das Werkstück von oben gescannt werden. Dazu würde der Scanner vertikal oberhalb einer Auflagefläche der Werkstücke liegen. Weiter kann auch von oben ein Foto aufgenommen werden, um die IST-Position des Werkstückes zu erfassen. Prinzipiell kann die Vorrichtung auch in Förderrichtung nach der Zentrierstation eine Erfassungseinrichtung umfassen, um die Position des Werkstückes nach der Zentrierung mit der SOLL-Position zu vergleichen. Auf diese Erfassungseinrichtung kann jedoch auch verzichtet werden.

Bevorzugt umfasst die Zentriervorrichtung eine Steuereinrichtung, welche derart ausgebildet ist, dass auf Basis von Messdaten der Zeilenkamera die Zentrierstation derart steuerbar ist, dass eine Soll-Ausrichtung des Werkstückes erreichbar ist. Vorzugsweise wird dabei durch die Zeilenkamera ein Hell-Dunkel-Profil des Werkstücks ermittelt. Damit werden einfach verarbeitbare Daten gewonnen, welche eine präzise Positionierung und Orientierung des Werkstücks erlauben.

Das erfasste Profil kann insbesondere mit einem Sollprofil verglichen werden, welches die von der nachfolgenden Bearbeitungsstation erwartete Position und Orientierung repräsentiert. Abweichungen zwischen dem Hell-Dunkel-Profil und dem Sollprofil werden durch die Steuerung in an sich bekannter Weise ausgewertet und in vorzunehmende Korrekturen, z. B. Korrekturen im Drehwinkel, in Längs- und in Querrichtung, umgerechnet. Die Korrekturen werden dann durch die Führungseinrichtungen umgesetzt, so dass das fertig positionierte und orientierte Werkstück dem Sollprofil entspricht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer Seitenansicht einer Zentriervorrichtung quer zur Förderrichtung;
- Fig. 2: eine schematische Darstellung einer Seitenansicht einer Zentriervorrichtung in Förderrichtung bei abgesenkten Greifvorrichtungen;
- Fig. 3: eine schematische Darstellung einer Seitenansicht einer Zentriervorrichtung in Förderrichtung bei angehobenen Greifvorrichtungen;
- Fig. 4: eine schematische Darstellung einer Draufsicht auf eine Zentriervorrichtung;
- Fig. 5: eine Schnittdarstellung durch eine kartesische Führungseinrichtung in Förderrichtung;
- Fig. 6: eine Schnittdarstellung durch eine kartesische Führungseinrichtung quer zur Förderrichtung bei angehobener Greifvorrichtung;
- Fig. 7: eine Schnittdarstellung durch eine kartesische Führungseinrichtung quer zur Förderrichtung bei abgesenkter Greifvorrichtung;
- Fig. 8 - 12: schematische Darstellungen von Draufsichten auf kartesische Führungseinrichtungen mit vier Greifvorrichtungen bei der Handhabung von unterschiedlichen Werkstücken;
- Fig. 13: eine schematische Darstellung einer Draufsicht auf eine kartesische Führungseinrichtung mit sechs Greifvorrichtungen bei der Handhabung von drei Werkstücken;
- Fig. 14 - 16: schematische Darstellungen von Draufsichten auf kartesische Führungseinrichtungen mit acht Greifvorrichtungen bei der Handhabung von unterschiedlichen Werkstücken;
- Fig. 17: eine schematische Darstellung einer Draufsicht einer kartesische Führungseinrichtung mit vier Greifvorrichtungen, wobei zwei Werkstücke um einen Winkel von 90° rotiert werden;
- Fig. 18: eine schematische Darstellung einer Draufsicht einer kartesische Führungseinrichtung mit vier Greifvorrichtungen, wobei zwei Werkstücke von einer Anordnung nebeneinander zu einer Anordnung hintereinander zentriert werden.

Grundsätzlich sind in den Figuren gleiche Teile mit gleichen Bezugszeichen versehen.

### Wege zur Ausführung der Erfindung

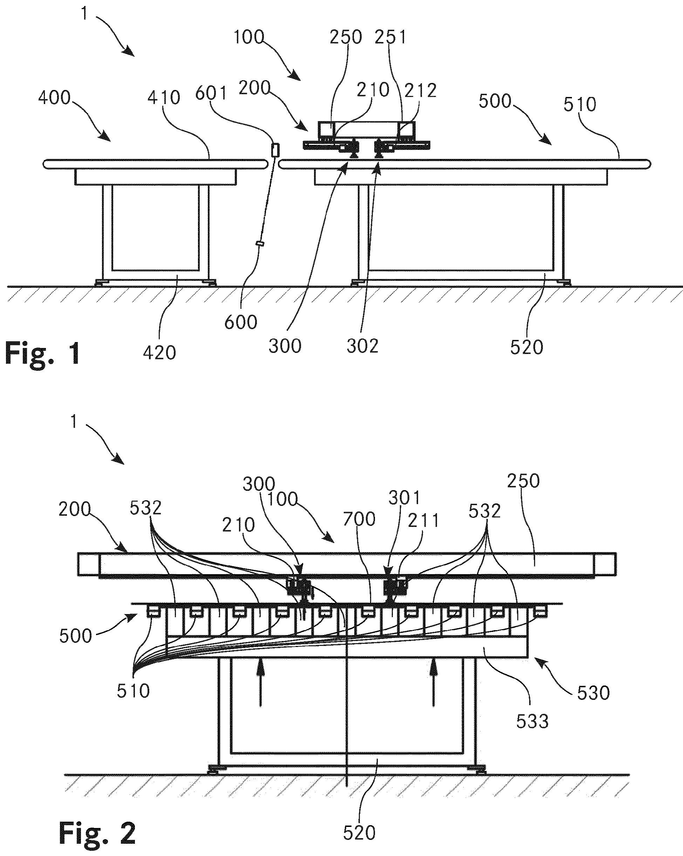

Die Figur 1 zeigt eine schematische Darstellung einer Seitenansicht einer Zentriervorrichtung 1 quer zur Förderrichtung.

Die Zentriervorrichtung 1 umfasst vorliegend ein Förderband 400 zum zufördern von Werkstücken (in Figur 1 nicht dargestellt). Das Förderband 400 umfasst dazu mehrere Förderbandstreifen 410, welche parallel in Förderrichtung orientiert sind. Das Förderband 400 umfasst einen Unterbau 420, auf welchem die Förderbandstreifen 410 gelagert sind. Die Förderbandstreifen 410 sind durch einen nicht dargestellten Antrieb, insbesondere einem oder mehreren Elektromotoren angetrieben. Im Betrieb sind die einzelnen Förderbandstreifen 410, insbesondere bei geradlinigen Abschnitten, mit derselben Geschwindigkeit (Meter pro Sekunde) angetrieben.

Weiter umfasst die Zentriervorrichtung 1 ein zweites Förderband 500 als Bestandteil der Zentrierstation 100. Das Förderband 500 umfasst ebenfalls mehrere parallel in Förderrichtung orientierte Förderbandstreifen 510, welche analog zum Förderband 400 angetrieben sind. Die Auflageflächen der Förderbänder liegen im Wesentlichen in derselben Ebene, so dass ein Werkstück vom Förderband 400 an das Förderband 500 übergeben werden kann.

Zwischen dem Förderband 400 und dem Förderband 500 ist eine Lücke vorgesehen, über welche hinweg ein Werkstück in einer Richtung vom Förderband 400 zum Förderband 500 gefördert werden kann. Die Lücke liegt somit quer zur Förderrichtung vor. Unterhalb einer Auflagefläche der Förderbänder, im Bereich der Lücke ist eine Zeilenkamera 600 angebracht, womit ein über die Lücke geführtes Werkstück erfasst und dessen Orientierung und Position bestimmt werden kann. Oberhalb der Auflagefläche der Förderbänder ist ein Reflektor 601 zum Reflektieren des von der Zeilenkamera 600 emittierten Lichts positioniert. Die Positionierung unterhalb der Auflagefläche der Förderbänder 400, 500 erlaubt eine besonders kompakte Bauweise der Zentriervorrichtung 1.

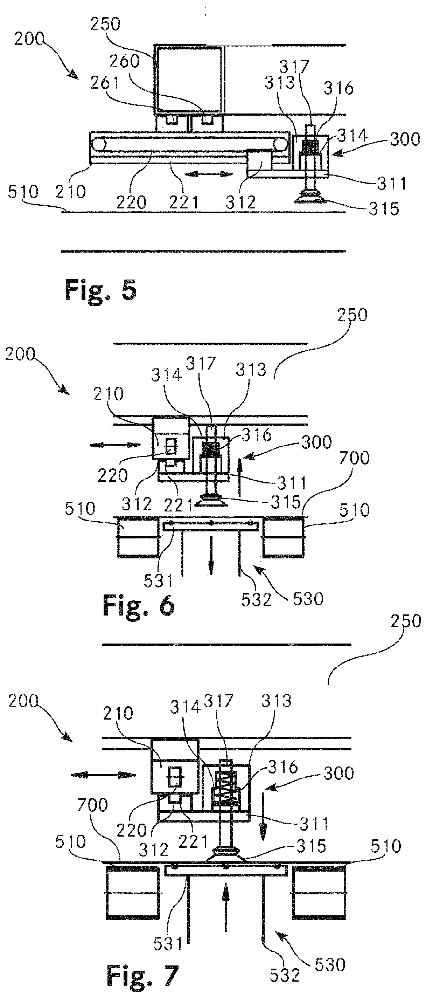

Die Zentrierstation 100 weist weiter eine kartesische Führungseinrichtung 200 auf, wovon in der Figur 1 zwei rechtwinklig zur Bildebene und parallel verlaufende zweite Linearführungen 250, 251 umfasst. An den beiden zweiten Linearführungen 250, 251 sind jeweils eine erste Linearführung 210 mit einer Greifvorrichtung 300 respektive eine erste Linearführung 212 mit einer Greifvorrichtung 302 quer zur Förderrichtung und horizontal verfahrbar angeordnet. Die Greifvorrichtungen 300, 302 sind an den beiden ersten Linearführungen 210, 212 in der Förderrichtung verfahrbar und bezüglich der zweiten Linearführungen 210, 212 anheb- und absenkbar (siehe unten, Figuren 5 - 7).

Die Figur 2 zeigt eine schematische Darstellung einer Seitenansicht einer Zentriervorrichtung 1 in Förderrichtung bei abgesenkten Greifvorrichtungen 210, 211. Die Figur 2 zeigt nun insbesondere die einzelnen Förderbandstreifen 510, welche parallel in Förderrichtung und hinsichtlich der Figur 2 orthogonal zur Blattebene verlaufen. Daher sind die einzelnen Förderbandstreifen 510 im Wesentlichen quadratisch dargestellt.

Zusätzliche zeigt die Figur 2 eine Hubeinheit 530, womit durch Zwischenräume zwischen den Förderbandstreifen 510 ein angefördertes Werkstück 700 angehoben werden kann. Die Hubeinheit umfasst mehrere über eine Grundplatte 533 verbundene Kugelplatten (siehe Figuren 5 - 7), welche in den Zwischenräumen zwischen den Förderbandstreifen 510 hindurchgeführt werden können, so dass eine Auflagefläche für das Werkstück 700 geschaffen wird, welche höher liegt, als die Auflageflächen der Förderbandstreifen. Die Kugelplatten 531 sind mittels eines oder mehrerer Pneumatikzylinder anhebbar (nicht dargestellt).

In der Figur 2 ist das Werkstück 700 durch die Greifvorrichtungen 210, 211 ergriffen und die Hubeinheit 530 ist in einer oberen Stellung, in welcher das Werkstück 700 nicht in Kontakt mit den Förderbandstreifen 510 ist. Die Einzelheiten dazu sind näher zu den Figuren 5 - 7 beschrieben. In dieser Konfiguration kann nun mittels der kartesischen Führung 200 das Werkstück 700 zentriert werden. Dazu werden anhand der durch die Zeilenkamera 600 ermittelten IST-Position und der bekannten SOLL-Position die einzelnen Linearführungen 210, 211, 250 (die Linearführung 251 ist nicht ersichtlich und befindet sich hinter der Linearführung 250) verfahren, um das Werkstück 700 in die SOLL-Position zu überführen.

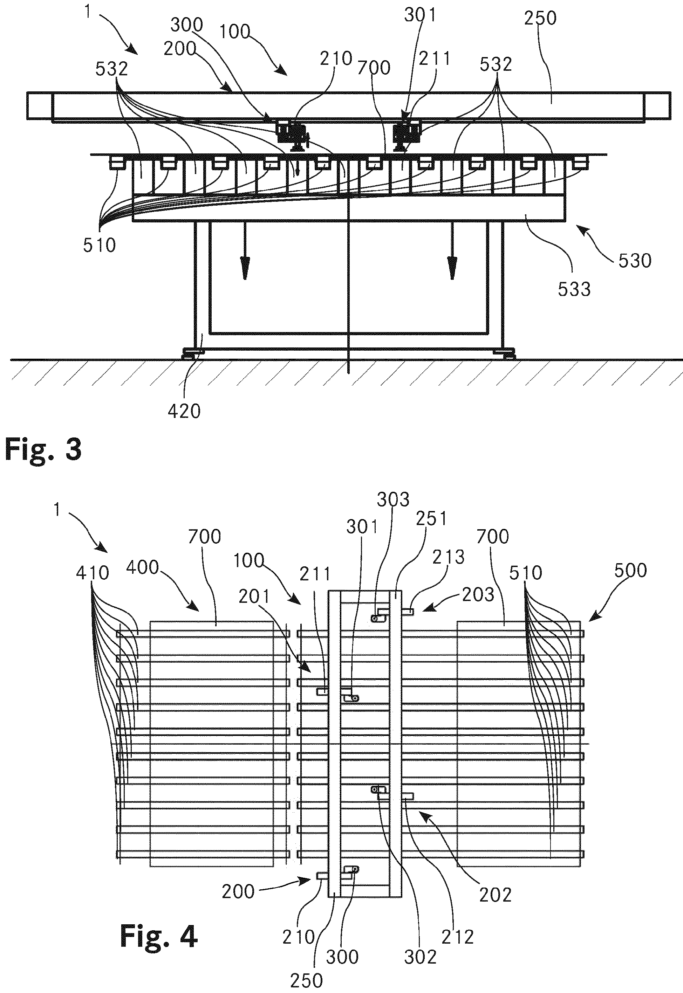

Die Figur 3 zeigt eine schematische Darstellung einer Seitenansicht einer Zentriervorrichtung in Förderrichtung bei angehobenen Greifvorrichtungen 210, 211. Nachdem das Werkstück 700 in die SOLL-Position überführt ist, wird einerseits die Hubeinheit 530 nach unten und anderseits die Greifvorrichtungen 300, 301 nach oben verfahren, womit das Werkstück 700 wieder auf dem Förderband 500 aufliegt und durch dasselbe weiter transportiert, insbesondere zum Beispiel zu einer Presse zur Weiterverarbeitung des Werkstückes 700, werden kann.

Die Figur 4 zeigt eine schematische Darstellung einer Draufsicht auf eine Zentriervorrichtung 100, wobei auf dem Förderband 400 sowie in Förderrichtung nach den kartesischen Führungseinrichtungen 200 - 203 jeweils ein Werkstück 700 geführt ist. Damit zeigt die Figur 4 einen Zustand im Übergangszeitraum, in welchem soeben ein Werkstück 700 ausgerichtet wurde und ein weiteres Werkstück 700 vor dem Eintritt in die Zentrierstation 100 steht. Die Zentrierstation 100 weist vorliegend eine kartesische Führungseinrichtung 200 mit zwei quer zur Förderrichtung parallel versetzten, zweiten Linearführungen 250, 251 auf. Die beiden zweiten Linearführungen 250, 251 umfassen jeweils zwei erste Linearführungen 210, 211 respektive 212, 213 auf, an welchen jeweils eine Greifvorrichtung 300, 301 respektive 302, 303 gehalten ist. Mit den zweiten Linearführungen 250, 251 können vorliegend die ersten Linearführungen 210, 211 respektive 212, 213 quer zur Förderrichtung verfahren werden. Mit den ersten Linearführungen 210, 211 respektive 212, 213 können die Greifvorrichtungen 300, 301 respektive 302, 303 in Förderrichtung verfahren werden.

Die nachfolgenden Figuren 5 bis 7 zeigen die kartesische Führungseinrichtung 200 und insbesondere die Greifvorrichtung 300 im Detail.

Die Figur 5 zeigt eine Schnittdarstellung durch eine kartesische Führungseinrichtung 200 in Förderrichtung. In dieser Darstellung ist die zweite Linearführung 250 im Querschnitt zu sehen. An dieser ist die erste Linearführung 210 über den Antriebsriemen 260 verfahrbar gehalten. Der zweite Antriebsriemen 261 ist für die, in dieser Abbildung nicht ersichtliche erste Linearführung 211 vorgesehen. Die erste Linearführung 210 umfasst ebenfalls einen Antriebsriemen 220, womit die Greifvorrichtung 300 in Förderrichtung verfahren werden kann.

Die Greifvorrichtung 300 umfasst eine Grundplatte 311, an welcher am einen Ende eine Halterung 312 zur Verbindung mit dem Antriebsriemen 220 befestigt ist. Am anderen, gegenüberliegenden Ende der Grundplatte 311 ist ein Zylinder 313 befestigt, in welchem ein Kolben 314 vertikal verfahrbar gelagert ist. Der Kolben 314 ist mit einer Kolbenstange 317 verbunden, welche an einem vertikal unteren Ende einen Sauger 315 umfasst. Vertikal unterhalb des Kolbens ist eine Druckfeder 316 angeordnet, welche den Kolben 314 und damit auch den Sauger 315 nach oben treibt. Um den Sauger abzusenken, wird der Raum im Zylinder 313 vertikal über dem Kolben 314 mit Druckluft beaufschlagt. Damit wird der Kolben 314 entgegen der Federkraft nach unten verfahren, womit sich der Sauger 315 absenkt. In der vorliegenden Figur 5 ist die Feder 316 im Wesentlichen (abgesehen von der darauf wirkenden Gewichtskraft) entspannt und der Sauger 315 ist in angehobenem Zustand. Der Sauger 315 wird aktiv mit Unterdruck (Vakuum) betätigt. Die Druckluft respektive Vakuumverbindungen sind in den Figuren nicht dargestellt, dem Fachmann ist deren Anordnung hinreichend klar. Der Sauger 315 ist frei drehbar, so dass ein Werkstück zur Zentrierung auch rotiert werden kann.

Die Figur 6 zeigt eine Schnittdarstellung durch eine kartesische Führungseinrichtung 200 quer zur Förderrichtung bei angehobener Greifvorrichtung 300. Insbesondere anhand der ersten Linearführung 210 ist gut ersichtlich, dass die Blickrichtung nun in Förderrichtung ist. Im Bereich des Förderbands 500 sind zwei einzelne Förderbandstreifen 510 ersichtlich, wobei zwischen diesen beiden Förderbandstreifen 510 die Hubeinheit 530 angeordnet ist. Die Hubeinheit 530 umfasst eine Kugelplatte 531, welche mittels eines oder mehreren Hubzylinder angehoben respektive abgesenkt werden kann. Die Kugelplatte 531 ist über Stützen 532 mit einer Grundplatte 533 (siehe Figuren 2 und 3) verbunden, welcher vorliegend pneumatisch betätigbar ist. Um ein in der Zentrierstation 100 befindliches Werkstück 700 zu zentrieren, wird nun gleichzeitig die Greifvorrichtung 200, das heisst der Sauger 315 abgesenkt und das Werkstück 700 durch die Hubeinheit 530 mit den Kugelplatten 531 von den Förderbandstreifen 510 angehoben.

Die Figur 7 zeigt eine Schnittdarstellung durch eine kartesische Führungseinrichtung 200 quer zur Förderrichtung bei abgesenkter Greifvorrichtung 300 und angehobener Hubeinheit 530. In diesem Zustand kann nun mittels der kartesischen Führungseinrichtung 200 das Werkstück 700 ausgerichtet werden. Dazu können sämtliche, im vorliegenden Beispiel die vier Greifvorrichtungen 300 - 303 unabhängig voneinander in der Ebene verfahren werden, um die SOLL-Position des Werkstückes 700 zu erreichen.

Je nach Konfiguration können mit der Zentriervorrichtung 1 unterschiedliche Zentrierungen, gegebenenfalls an mehreren Werkstücken gleichzeitig vorgenommen werden. Dazu können die Anzahl der Linearführungen variiert werden.

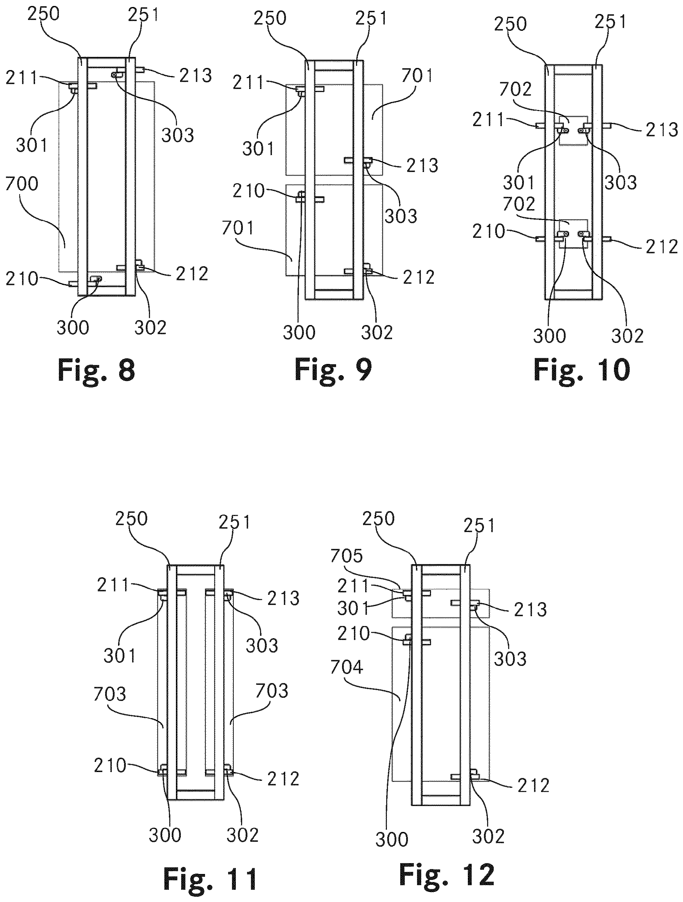

Die Figuren 8 - 12 zeigen schematische Darstellungen von Draufsichten auf kartesischen Führungseinrichtungen 200 mit vier Greifvorrichtungen bei der Handhabung von unterschiedlichen Werkstücken 700 - 706, welche beispielhaft allesamt rechteckig ausgebildet sind. Dem Fachmann ist jedoch klar, dass jede erdenkliche Form von Werkstücken mit der Zentriervorrichtung zentriert werden kann, solange eine Fläche vorliegt, an welcher eine Greifvorrichtung 300 das Werkstück ergreifen kann.

Die Figur 8 zeigt eine Anordnung von vier Greifvorrichtungen 300 - 303, wobei mit lediglich zwei gegenüberliegenden Greifvorrichtungen 301 und 302 das Werkstück 700 an diagonal gegenüberliegenden Enden ergriffen wird. Das Werkstück 700 beansprucht dabei in der vorliegenden Orientierung im Wesentlichen die volle Breite des Förderbandes 500.

Die Figur 9 zeigt eine Anordnung gemäss Figur 8, wobei mit paarweise gegenüberliegenden Greifvorrichtungen 300, 302 respektive 301, 303 jeweils ein Werkstück 701 an diagonal gegenüberliegenden Enden ergriffen ist. Die beiden in Querrichtung nebeneinander liegenden Werkstücke 701 beansprucht dabei in der vorliegenden Orientierung im Wesentlichen die volle Breite des Förderbandes 500. Damit wird illustriert, dass mit der Zentriervorrichtung 1 auch mehrere Werkstücke 701 gleichzeitig zentriert werden können.

Die Figur 10 zeigt eine Anordnung gemäss Figur 8, wobei mit paarweise gegenüberliegenden Greifvorrichtungen 300, 302 respektive 301, 303 jeweils ein Werkstück 702 gegenüberliegend mittig ergriffen ist. Die Werkstücke 702 sind im Vergleich zu den Werkstücken 701 klein bemessen. Damit wird gezeigt, dass die Zentriervorrichtung im Wesentlichen unabhängig von der Werkstückgrösse ist.

Die Figur 11 zeigt eine Anordnung gemäss Figur 8, wobei jeweils ein Werkstück 703 durch zwei nebeneinander angeordnete Greifvorrichtungen 300, 301 respektive 302, 303 ergriffen ist. Damit wird gezeigt, dass auch mehrere hintereinander angeordnete Werkstücke 703 durch die Zentriervorrichtung 1 gleichzeitig zentriert werden können.

Die Figur 12 zeigt eine Anordnung gemäss Figur 8, wobei mit paarweise gegenüberliegenden Greifvorrichtungen 300, 302 respektive 301, 303 jeweils ein Werkstück 704 respektive 705 an diagonal gegenüberliegenden Enden ergriffen ist. Die Werkstücke 704 und 705 weisen dabei unterschiedliche Dimensionen quer zur Förderrichtung auf. Damit wird illustriert, dass mit der Zentriervorrichtung 1 auch unterschiedlich dimensionierte Werkstücke 704, 705 gleichzeitig zentriert werden können.

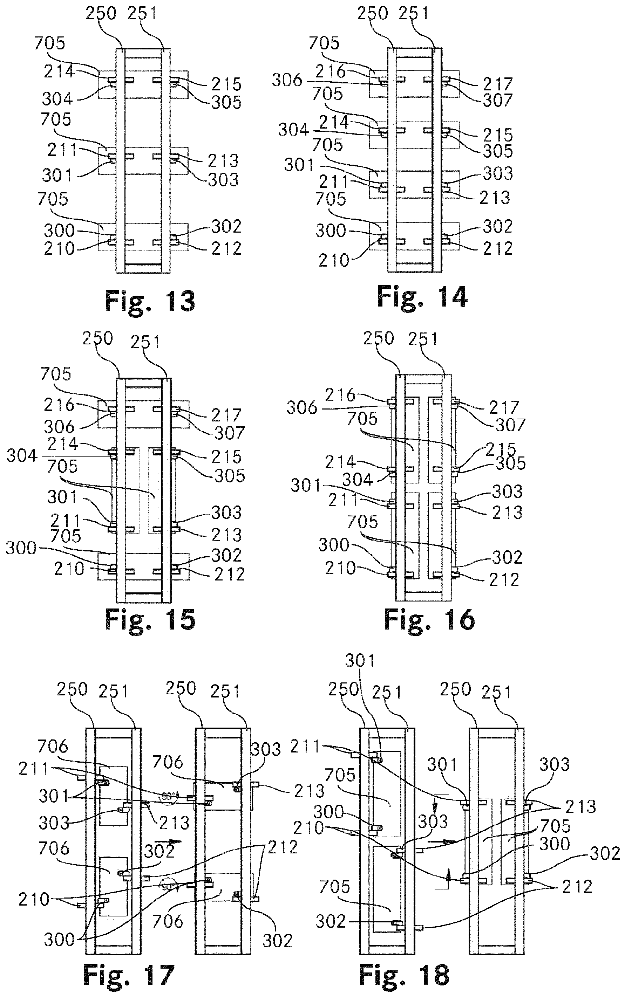

Die Figur 13 zeigt eine schematische Darstellung einer Draufsicht auf eine kartesische Führungseinrichtung 200 mit sechs Greifvorrichtungen 300 - 305 bei der Handhabung von drei identischen Werkstücken 705. Mit paarweise gegenüberliegenden Greifvorrichtungen 300, 302 respektive 301, 303 respektive 304, 305 wird jeweils ein Werkstück 705 an gegenüberliegenden Enden mittig ergriffen. Damit wird gezeigt, dass auch drei nebeneinander liegende Werkstücke 705 simultan zentriert werden können.

Die Figuren 14 - 16 zeigen schematische Darstellungen von Draufsichten auf kartesische Führungseinrichtungen 200 mit acht Greifvorrichtungen 300 - 307 bei der Handhabung von unterschiedlichen Werkstücken. In der Figur 14 sind analog zur Figur 13 Werkstücke 705 ergriffen, wobei statt deren drei nun deren vier simultan zentriert werden. Die Figur 15 zeigt im Wesentlichen analog zur Figur 14, dass von den vier zu zentrierenden Werkstücken 705 nicht zwingend alle dieselbe Orientierung aufweisen müssen. Vorliegend sind zwei Werkstücke 705 mit deren Längsrichtung quer zur Förderrichtung und zwei in Förderrichtung ausgerichtet. Die Figur 16 zeigt ebenfalls vier Werkstücke 705, welche nun alle quer zur Förderrichtung ausgerichtet sind.

Die Figur 17 zeigt eine schematische Darstellung einer Draufsicht einer kartesischen Führungseinrichtung 200 mit vier Greifvorrichtungen 300 - 303, wobei zwei Werkstücke 706 um einen Winkel von 90° rotiert werden. Im Zustand vor der Zentrierung sind die Werkstücke 706 jeweils mit deren Längsrichtung quer zur Förderrichtung orientiert. Das erste Werkstück 706 ist diagonal versetzt durch die Greifvorrichtungen 300, 302 ergriffen und das zweite Werkstück 706 ist diagonal versetzt durch die Greifvorrichtungen 301, 303 ergriffen. Zur Ausführung der Rotation werden nun die Greifvorrichtungen 300, 302 respektive 301, 303 mittels der ersten Führungseinrichtungen 250, 251 zueinander hin bewegt. Gleichzeitig werden die Greifvorrichtungen 300, 302 respektive 301, 303 voneinander weg bewegt, so dass der Abstand der Greifvorrichtungen 300, 302 respektive 301, 303 zueinander konstant bleibt. Sofern der Verfahrweg der ersten Linearführungen 210 - 213 hinreichend gross ist respektive das Werkstück mit hinreichend kleinem Abstand zwischen den Greifvorrichtungen ergriffen werden kann, ist auch eine Rotation um einen Winkel von mehr als 90° möglich. Wenn die Greifvorrichtungen 301 und 303 respektive 300 und 302 sich in Förderrichtung kreuzen können (die Greifvorrichtungen müssten mit den Linearführungen zum Beispiel über eine Mittellinie quer zur Förderrichtung zwischen den zweiten Linearführungen 250 und 251 führbar sein), ist eine Rotation der Werkstücke 706 um einen Winkel von mehr als 180° möglich.

Die Figur 18 zeigt eine schematische Darstellung einer Draufsicht einer kartesischen Führungseinrichtung 200 mit vier Greifvorrichtungen 300 - 303, wobei zwei Werkstücke 705 von einer Anordnung nebeneinander zu einer Anordnung hintereinander zentriert werden. Im Zustand vor der Zentrierung sind die Werkstücke 705 jeweils mit deren Längsrichtung quer zur Förderrichtung nebeneinander orientiert. Das erste Werkstück 705 ist im Bereich einer in Förderrichtung vorderen Kante durch die Greifvorrichtungen 302, 303 ergriffen und das zweite Werkstück 705 ist im Bereich einer in Förderrichtung hinteren Kante durch die Greifvorrichtungen 300, 301 ergriffen. Zur Ausführung der Bewegung werden nun die Greifvorrichtungen 302, 303 in und die Greifvorrichtungen 300, 301 entgegen der Förderrichtung mittels der ersten Linearführungen 212, 213 respektive 210, 211 verfahren. Anschliessend werden sie mittels der ersten Führungseinrichtungen 250, 251 zueinander hin bewegt, bis sie bezüglich der Förderrichtung hintereinander angeordnet sind.

Es ist zu beachten, dass eines oder mehrere Werkstücke zur Zentrierung auch mehrfach ergriffen werden kann, womit eine beliebige Positionierung von mehreren Werkstücken untereinander möglich ist.

Das Förderband 400 muss nicht zwingend Förderbandstreifen 410 aufweisen, sondern kann auch lediglich ein einziges Förderband umfassen, welches die volle Transportbreite aufweist. Statt des Förderbands 400 kann auch ein anderer Zuförderer vorgesehen sein, zum Beispiel einen Rollenförderer oder dergleichen.

Die ersten Linearführungen 210 - 217 sowie die zweiten Linearführungen 250, 251 sind vorliegend zwar durch Antriebsriemen angetrieben, können aber auch andere Antriebe umfassen, zum Beispiel einen Spindelantrieb, einen Zahnstangenantrieb oder dergleichen. Dem Fachmann sind weitere Varianten bekannt.

Die Zeilenkamera 600 kann auch anderweitig positioniert sein. Statt einer Zeilenkamera 600 können auch andere Erfassungsmittel vorgesehen sein, um die Position und die Ausrichtung vor der Zentrierung festzustellen.

Während in den vorliegenden Ausführungsbeispielen ausschliesslich kartesische Führungseinrichtungen gezeigt sind, ist dem Fachmann klar, dass auch andere Führungseinrichtungen vorgesehen sein können. Insbesondere können einzelne oder alle kartesischen Führungseinrichtungen in bekannter Weise durch Roboter oder ähnliches ersetzt werden.

Zusammenfassend ist festzustellen, dass erfindungsgemäss eine Zentriervorrichtung geschaffen wird, welche bei einfachem Aufbau besonders variabel einsetzbar ist.

## Patentansprüche

1. Zentriervorrichtung (1) zum Zentrieren von flächigen Werkstücken (700 - 706), insbesondere für in einer Presse zu verarbeitende Platinen aus Blech, umfassend eine Zentrierstation (100) mit mindestens einer ersten und einer zweiten Greifvorrichtung (300, 301) zum Ergreifen des Werkstückes (700 - 706), sowie Fördermittel zum Anfördern von Werkstücken (700 - 706) in einer Förderrichtung zur Zentrierstation (100), wobei die erste und die zweite Greifvorrichtung (300, 301) jeweils mit einer ersten respektive einer zweiten Führungseinrichtung (200, 201) horizontal verfahrbar sind, **dadurch gekennzeichnet, dass** die erste und die zweite Greifvorrichtung (300, 301) um eine Achse frei drehbar sind, wobei die Zentriervorrichtung derart konfiguriert ist, dass für die Zentrierung des Werkstücks letzteres durch die erste und die zweite Greifvorrichtung (300, 301) ergriffen wird und, dass nach dem Ergreifen des Werkstücks die Führungseinrichtungen (200, 201) derart betätigt werden, dass das Werkstück zentriert wird.

2. Zentriervorrichtung (1) nach Anspruch 1, **dadurch gekennzeichnet, dass** die Fördermittel mindestens ein Förderband (500) umfassen.

3. Zentriervorrichtung (1) nach Anspruch 2, **dadurch gekennzeichnet, dass** das Förderband (500) mehrere parallele und zueinander beabstandete Förderbandstreifen (510) umfasst, wobei in einem Zwischenraum zwischen zwei Förderbandstreifen eine Hubeinheit (530) mit einer Werkstückauflagefläche angeordnet ist, so dass ein Werkstück (700 - 706) bei angehobener Werkstückauflagefläche ausschliesslich auf der Werkstückauflagefläche aufliegen kann.

4. Zentriervorrichtung (1) nach Anspruch 3, **dadurch gekennzeichnet, dass** die Werkstückauflagefläche einen Reibungskoeffizienten aufweist, welcher geringerer ist als ein Reibungskoeffizient einer Werkstückauflagefläche der Förderbandstreifen (510).

5. Zentriervorrichtung (1) nach Anspruch 4, **dadurch gekennzeichnet, dass** die Oberfläche der Hubeinheit (530) eine Kugelplatte (531) umfasst, welche derart angeordnet sind, dass bei angehobener Hubeinheit ein Werkstück (700 - 706) auf Kugeln der Kugelplatte (531) aufliegen kann.

6. Zentriervorrichtung (1) nach einem der Ansprüche 1 bis 5, **dadurch gekennzeichnet, dass** die Zentrierstation (100) weiter eine dritte und eine vierte Greifvorrichtung (302, 303) umfasst, wobei die dritte und die vierte Greifvorrichtung (302, 303) um die Achse frei drehbar sind und jeweils mittels einer dritten respektive vierten Führungseinrichtung (200 - 203) horizontal verfahrbar sind.

7. Zentriervorrichtung (1) nach einem der Ansprüche 1 bis 6, **dadurch gekennzeichnet, dass** eine der Führungseinrichtungen (200 - 203) eine erste Linearführung (210) zum Verfahren der Greifvorrichtung (300) in der Förderrichtung und eine zweite Linearführung (250) zum Verfahren der ersten Linearführung (210) rechtwinklig zur Förderrichtung umfassen.

8. Zentriervorrichtung (1) nach Anspruch 7, **dadurch gekennzeichnet, dass** die ersten Linearführungen (210, 211) der ersten und der zweiten Führungseinrichtungen zueinander parallel und die zweiten Linearführungen (250) der ersten und der zweiten Führungseinrichtungen (210, 211) zueinander fluchtend angeordnet sind.

9. Zentriervorrichtung (1) nach einem der Ansprüche 7 bis 8, **dadurch gekennzeichnet, dass** die erste Linearführung (210, 211) einen Riemenantrieb zum Verfahren der Greifvorrichtung und/oder die zweite Linearführung (250) einen Riemenantrieb zum Verfahren der ersten Linearführung umfasst.

10. Zentriervorrichtung (1) nach einem der Ansprüche 7 bis 9, **dadurch gekennzeichnet, dass** die Greifvorrichtung (300), insbesondere relativ zur ersten Linearführung (210), absenkbar und anhebbar, vorzugsweise pneumatisch anhebbar und/oder absenkbar ist.

11. Zentriervorrichtung (1) nach Anspruch 10, **dadurch gekennzeichnet, dass** die Greifvorrichtung (300) pneumatisch, insbesondere entgegen einer Rückstellkraft, vorzugsweise entgegen einer Federkraft anhebbar ist.

12. Zentriervorrichtung (1) nach einem der Ansprüche 1 bis 11, **dadurch gekennzeichnet, dass** die Greifvorrichtung (300) einen Sauger (315) zum Ergreifen des Werkstücks (700 - 706) umfasst.

13. Zentriervorrichtung (1) nach einem der Ansprüche 1 bis 12, **dadurch gekennzeichnet dass** sie eine Erfassungseinrichtung zum Erfassen einer Position und einer Orientierung eines angeförderten Werkstücks (700 - 706) umfasst.

14. Zentriervorrichtung (1) nach Anspruch 13, **dadurch gekennzeichnet, dass** sie eine Steuereinrichtung umfasst, welche derart ausgebildet ist, dass auf Basis von Messdaten der Zeilenkamera (600) die Zentrierstation (100) derart steuerbar ist, dass eine Soll-Ausrichtung des Werkstückes (700 - 706) erreichbar ist.

15. Verfahren zum Zentrieren eines flächigen Werkstückes (700 - 706) mit einer Zentriervorrichtung gemäss einem der Ansprüche 1 bis 14, insbesondere zum Zentrieren einer in einer Presse zu verarbeitenden Platine aus Blech, **gekennzeichnet durch** die folgenden Schritte:
a) Bestimmen einer aktuellen Position und einer Orientierung des auf einem Fördermittel angeförderten Werkstückes (700 - 706) mittels einer Erfassungseinrichtung;
b) Fördern des Werkstückes (700 - 706) zu einer Zentrierstation (100);
c) Ergreifen des Werkstückes (700 - 706) mit einer ersten und einer zweiten, um eine Achse frei drehbaren Greifvorrichtung (300, 301).
d) Ausrichten des Werkstückes (700 - 706) aufgrund der aktuellen Position und einer Soll-Position durch die erste respektive die zweite Führungseinrichtung.

## Claims

1. A centering device (1) for centering flat workpieces (700-706), in particular for sheet metal blanks to be processed in a press, comprising a centering station (100) having at least a first and a second gripping device (300, 301) for gripping the workpiece (700-706), and conveying means for conveying workpieces (700-706) in a conveying direction to the centering station (100), where the first and the second gripping device (300, 301) can each be moved horizontally by a first and a second guiding device (200, 201), respectively, **characterized in that** the first and the second gripping device (300, 301) can rotate freely about an axis, wherein wherein the centering device is configured such that, for centering the workpiece, the latter is gripped by the first and second gripping devices (300, 301) and, after gripping the workpiece, the guide devices (200, 201) are actuated such that the workpiece is centered.

2. The centering device (1) as claimed in claim 1, **characterized in that** the conveying means comprise at least one conveyor belt (500).

3. The centering device (1) as claimed in claim 2, **characterized in that** the conveyor belt (500) comprises a plurality of parallel conveyor belt strips (510) which are spaced apart from one another, wherein a lifting unit (530) having a workpiece support surface is arranged in an interspace between two conveyor belt strips, with the result that, with the workpiece support surface raised, a workpiece (700-706) can lie exclusively on the workpiece support surface.

4. The centering device (1) as claimed in claim 3, **characterized in that** the workpiece support surface has a coefficient of friction which is less than a coefficient of friction of a workpiece support surface of the conveyor belt strips (510).

5. The centering device (1) as claimed in claim 4, **characterized in that** the surface of the lifting unit (530) comprises a ball plate (531) which is arranged in such a way that, with the lifting unit raised, a workpiece (700-706) can lie on balls of the ball plate (531).

6. The centering device (1) as claimed in one of claims 1 to 5, **characterized in that** the centering station (100) further comprises a third and a fourth gripping device (302, 303), wherein the third and the fourth gripping device (302, 303) can rotate freely about the axis and can each be moved horizontally by means of a third and fourth guiding device (200-203), respectively.

7. The centering device (1) as claimed in one of claims 1 to 6, **characterized in that** one of the guiding devices (200-203) comprise a first linear guide (210) for moving the gripping device (300) in the conveying direction and a second linear guide (250) for moving the first linear guide (210) at a right angle to the conveying direction.

8. The centering device (1) as claimed in claim 7, **characterized in that** the first linear guides (210, 211) of the first and of the second guiding devices are arranged parallel to one another, and the second linear guides (250) of the first and of the second guiding devices (210, 211) are arranged in alignment with one another.

9. The centering device (1) as claimed in either of claims 7 and 8, **characterized in that** the first linear guide (210, 211) comprises a belt drive for moving the gripping device, and/or the second linear guide (250) comprises a belt drive for moving the first linear guide.

10. The centering device (1) as claimed in one of claims 7 to 9, **characterized in that** the gripping device (300) can be lowered and raised, preferably can be pneumatically raised and/or lowered, in particular relative to the first linear guide (210).

11. The centering device (1) as claimed in claim 10, **characterized in that** the gripping device (300) can be pneumatically raised, in particular counter to a restoring force, preferably counter to a spring force.

12. The centering device (1) as claimed in one of claims 1 to 11, **characterized in that** the gripping device (300) comprises a sucker (315) for gripping the workpiece (700-706).

13. The centering device (1) as claimed in one of claims 1 to 12, **characterized in that** it comprises a detection device for detecting a position and an orientation of a conveyed workpiece (700-706).

14. The centering device (1) as claimed in claim 14, **characterized in that** it comprises a control device which is designed in such a way that the centering station (100) can be controlled on the basis of measurement data of the line camera (600) in such a way that a desired orientation of the workpiece (700-706) can be achieved.

15. A method for centering a flat workpiece (700-706) as claimed in one of claims 1 to 15, in particular a sheet metal blank to be processed in a press, comprising the following steps:
a) determining a current position and an orientation of the workpiece (700-706) conveyed on a conveying means by means of a detection device;
b) conveying the workpiece (700-706) to a centering station (100);
c) gripping the workpiece (700-706) by a first and a second gripping device (300, 301) which can rotate freely about an axis;
d) orienting the workpiece (700-706) on the basis of the current position and of a desired position by the guiding devices.

## Revendications

1. Dispositif de centrage (1) pour le centrage de pièces usinées plates (700 - 706), en particulier pour des platines en tôle à traiter dans une presse, comportant une station de centrage (100) avec au moins un premier et un deuxième dispositif de préhension (300, 301) permettant de saisir la pièce usinée (700 - 706), ainsi que des moyens de transport permettant d'acheminer des pièces usinées (700 - 706) dans une direction de transport vers la station de centrage (100), dans lequel le premier et le deuxième dispositif de préhension (300, 301) peuvent être déplacés horizontalement respectivement à l'aide d'un premier ou d'un deuxième système de guidage (200, 201), **caractérisé en ce que** le premier et le deuxième dispositif de préhension (300, 301) peuvent tourner librement autour d'un axe, dans lequel le dispositif de centrage est configuré de telle façon que pour le centrage de la pièce usinée, celle-ci est saisie par le premier et le deuxième dispositif de préhension (300, 301), et qu'après la préhension de la pièce usinée, les systèmes de guidage (200, 201) sont actionnés de manière à ce que la pièce usinée soit centrée.

2. Dispositif de centrage (1) selon la revendication 1, **caractérisé en ce que** les moyens de transport comportent au moins une courroie de transport (500).

3. Dispositif de centrage (1) selon la revendication 2, **caractérisé en ce que** la courroie de transport (500) comporte plusieurs bandes de courroie de transport (510), dans lequel une unité de levage (530) dotée d'une surface d'appui de pièce usinée est disposée dans un espace intermédiaire entre deux bandes de courroie de transport, de telle façon qu'une pièce usinée (700 - 706) peut reposer exclusivement sur la surface d'appui de pièce usinée lorsque la surface d'appui de pièce usinée est relevée.

4. Dispositif de centrage (1) selon la revendication 3, **caractérisé en ce que** la surface d'appui de pièce usinée présente un coefficient de friction, lequel est inférieur à un coefficient de friction d'une surface d'appui de pièce usinée des bandes de courroie de transport (510).

5. Dispositif de centrage (1) selon la revendication 4, **caractérisé en ce que** la surface de l'unité de levage (530) comporte une plaque à billes (531), laquelle est agencée de telle façon qu'une pièce usinée (700 - 706) peut reposer sur des billes de la plaque à billes (531) lorsque l'unité de levage est relevée.

6. Dispositif de centrage (1) selon l'une des revendications 1 à 5, **caractérisé en ce que** la station de centrage (100) comporte en outre un troisième et un quatrième dispositif de préhension (302, 303), dans lequel le troisième et le quatrième dispositif de préhension (302, 303) peuvent tourner librement autour de l'axe et sont déplaçables horizontalement respectivement au moyen d'un troisième ou d'un quatrième système de guidage (200 - 203).

7. Dispositif de centrage (1) selon l'une des revendications 1 à 6, **caractérisé en ce que** l'un des systèmes de guidage (200 - 203) comporte un premier guidage linéaire (210) pour le déplacement du dispositif de préhension (300) dans la direction de transport et un deuxième guidage linéaire (250) pour le déplacement du premier guidage linéaire (210) perpendiculairement à la direction de transport.

8. Dispositif de centrage (1) selon la revendication 7, **caractérisé en ce que** les premiers guidages linéaires (210, 211) du premier et du deuxième système de guidage sont disposés parallèlement l'un par rapport à l'autre et les deuxièmes guidages linéaires (250) du premier et du deuxième système de guidage (210, 211) sont disposés en affleurement l'un par rapport à l'autre.

9. Dispositif de centrage (1) selon l'une des revendications 7 à 8, **caractérisé en ce que** le premier guidage linéaire (210, 211) comporte un entraînement à courroie pour le déplacement du dispositif de préhension et/ou le deuxième guidage linéaire (250) comporte un entraînement à courroie pour le déplacement du premier guidage linéaire.

10. Dispositif de centrage (1) selon l'une des revendications 7 à 9, **caractérisé en ce que** le dispositif de préhension (300) peut être abaissé ou relevé, de préférence relevé et/ou abaissé de façon pneumatique, en particulier par rapport au premier guidage linéaire (210).

11. Dispositif de centrage (1) selon la revendication 10, **caractérisé en ce que** le dispositif de préhension (300) peut être relevé de façon pneumatique, en particulier contre une force de rappel, de préférence contre une force de ressort.

12. Dispositif de centrage (1) selon l'une des revendications 1 à 11, **caractérisé en ce que** le dispositif de préhension (300) comporte une ventouse (315) permettant de saisir la pièce usinée (700 - 706).

13. Dispositif de centrage (1) selon l'une des revendications 1 à 12, **caractérisé en ce qu'**il comporte un système de détection destiné à détecter une position et une orientation de la pièce usinée (700 - 706) acheminée.

14. Dispositif de centrage (1) selon la revendication 13, **caractérisé en ce qu'**il comporte un système de commande, lequel est conçu de telle façon que sur la base de données de mesure de la caméra linéaire (600), la station de centrage (100) peut être commandée de manière à atteindre une orientation de consigne de la pièce usinée (700 - 706).

15. Procédé de centrage d'une pièce usinée plate (700 - 706) à l'aide d'un dispositif de centrage selon l'une des revendications 1 à 14, en particulier pour le centrage d'une platine en tôle à traiter dans une presse, **caractérisé par** les étapes suivantes :
a) détermination d'une position et d'une orientation actuelles de la pièce usinée (700 - 706) acheminée sur un moyen de transport, au moyen d'un système de détection ;
b) transport de la pièce usinée (700 - 706) vers une station de centrage (100) ;
c) saisie de la pièce usinée (700 - 706) à l'aide d'un premier et d'un deuxième dispositif de préhension (300, 301) aptes à tourner librement autour d'un axe,
d) orientation de la pièce usinée (700 - 706) sur la base de la position actuelle et d'une position de consigne par le premier ou le deuxième système de guidage.
